Europäisches Patentamt

European Patent Office

Office européen des brevets

(11) Publication number: **0 057 521**
**B1**

# EUROPEAN PATENT SPECIFICATION

(45) Date of publication of patent specification: **02.04.86**

(51) Int. Cl.[4]: **G 01 N 29/00**, G 01 N 3/28

(21) Application number: **82300205.0**

(22) Date of filing: **15.01.82**

(54) **Determination of plastic anisotropy in sheet material.**

(30) Priority: **23.01.81 GB 8102185**

(43) Date of publication of application:
**11.08.82 Bulletin 82/32**

(45) Publication of the grant of the patent:
**02.04.86 Bulletin 86/14**

(84) Designated Contracting States:
**BE DE FR IT NL SE**

(56) References cited:
**GB-A-2 060 889**
**US-A-4 080 836**

**JOURNAL OF THE ACOUSTICAL SOCIETY OF
AMERICA, Vol. 58, No. 2, August 1975 New
York E.M. ZACHARIAS et al. "Measuring Sound
Velocity and Bulk Modulus of Plastics" pages
526 to 527**

The file contains technical information
submitted after the application was filed and
not included in this specification

(73) Proprietor: **British Steel Corporation
9 Albert Embankment
London SE1 7SN (GB)**

(72) Inventor: **Jones, Alun
155 Main Road
Bryncoch, Neath Glamorgan, Wales (GB)**

(74) Representative: **Fry, Alan Valentine et al
FRY HEATH & CO. Seloduct House 16-18 Station
Road
Redhill Surrey RH1 1NF (GB)**

(56) References cited:
**AMERICAN CERAMIC SOCIETY BULLETIN Vol.
54, No. 11, November 1975 Columbus H.E.
SHULL et al. "Design und Use of a 10-200 kHz
Ultrasonic System for Measuring Elastic
Moduli and Mechanical Q of Hard Materials"
pages 998 to 1001**

**THE SOVIET JOURNAL OF NONDESTRUCTIVE
TESTING, Vol. 16, No. 12, December 1980 New
York V.M. BOBRENKO et al. "Acoustic
Tensometry II. Methods and Apparatus
(Survey)" pages 910 to 924**

Courier Press, Leamington Spa, England.

**0 057 521**

(56) References cited:

'The Measurement of Normal Plastic Anisotropy in Sheet Steel", published April 1965 in "Sheet Metal Industries" pages 3-11

## Description

This invention relates to the determination of plastic anisotropy in sheet materials and is concerned with the rapid determination of the average plastic strain ratio $\bar{r}$, of sheet material, which is an important factor in predicting its 'drawability' characteristics.

Hetherto, $\bar{r}$ has conventionally been determined by cutting three test specimens from a sheet and separately subjecting each to a tensile test, $\bar{r}$ then being determined from the relationship

$$\bar{r} = 1/4(r_0 + 2r_{45} + r_{90})$$

where

The subscripts are the angles between the rolling direction and the axes of the specimens, and

$\bar{r}$ is the ratio of the natural strains in the width and thickness directions due to tensile elongation.

This method of determining $\bar{r}$ is described in a paper entitled "The Measurement of Normal Plastic Anisotropy in Sheet Steel" by M. Atkinson and I. M. MacLean which appears in the publication "Sheet Metal Industries" for April 1965.

Several disadvantages are associated with this method however. In particular, the specimens must be carefully prepared to be accommodated in the testing machine and care is needed in setting up the machine, and, after straining, ascertaining the length and width strains with the required degree of accuracy. These procedures are time consuming and consequently efforts have recently been made to devise more rapid means for determining this drawability characteristic. Much work has centred on the automation of the tensile testing procedure, for example, by incorporating extensometers for simultaneously monitoring width and thickness strains, but the need for careful specimen preparation in the three different directions remains.

It is known from the Journal of the Acoustical Society of America, Volume 58, No 2, August 1975, pages 526—527 that a relationship exists between acoustic anisotropy and the velocity of transverse ultrasonic waves transmitted through a test piece. Further, an ultrasonic system for measuring elastic moduli and mechanical clamping of hard ceramics for longitudinal flexural and torsional modes of vibration is known from American Ceramic Society Bulletin, Volume 54, No. 11, November 1975. However, neither document discloses a method or apparatus which enables average plastic strain ratio $\bar{r}$ of sheet material of known density to be determined.

It is an object of this invention to provide an improved method of determining the plastic properties of sheet material.

In one aspect the present invention provides a method of determining the average plastic strain ratio $\bar{r}$ of sheet material of known density which is characterised by the steps of measuring the transit time of mechanical vibrations transmitted through the sheet, determining therefrom, on the basis of an elastic property which is manifest at the velocity V at which the said vibrations are propagated, a value of the apparent thickness of sheet, independently measuring the true thickness of the sheet, and determining the value of $\bar{r}$ from an empirically predetermined relationship between the difference existing between the true and apparent values of sheet thickness and $\bar{r}$. In another aspect the invention provides a method as claimed in claim 3.

The invention further provides apparatus for performing the method described in the preceding paragraph, which apparatus is characterised by a first measuring station (3) having means for propagating mechanical vibrations through the thickness of the sheet and means for determining an apparent sheet thickness on the basis of an elastic property of the material which is manifest at the velocity V of the mechanical vibrations propagated through the sheet thickness, a second measuring station (1) having means for measuring true sheet thickness independently of the said elastic property of the sheet material, a computer (2) for processing the outputs from the first and second measuring stations and comparing the processed output with stored values representative of $\bar{r}$ and predetermined by conventional means for that sheet material, and a display unit (5) having means for providing a direct reading of $\bar{r}$ upon identity between said processed output and a said stored value.

Additionally, the invention provides apparatus for performing the method described above which is characterised by a measuring station (3) for sequentially effecting a first measurement representative of an apparent thickness of the sheet by propagating vibrations through the thickness of the sheet material and effecting a second measurement of the true thickness independently of the said elastic property of the sheet material, a computer (2) for processing the outputs from said station and comparing the processed output with stored values representative of $\bar{r}$ and predetermined by conventional means for that sheet material, and a display unit (5) for providing a direct reading of $\bar{r}$ upon identity between said processed output and a said stored value.

Conveniently, the vibrations may be in the longitudinal mode transmitted through the thickness of the sheet normal to the surface. Alternatively, longitudinal, torsional or compound waves, eg Lamb waves, may be propagated in diverse directions through the material to determine the elastic property.

The elastic property may be a constant, eg Youngs Modulus E—the ratio of uniaxial stress to corresponding uniaxial strain—or the apparent Youngs Modulus $\phi$ in a specified direction if the material is non-isotropic, and this may be determined by measuring the transit time $t/2$ of a mechanical vibration transmitted through the sheet thickness and independently measuring the sheet thickness d eg by physical means such as a micrometer, by optical means, by nucleonic means, or indeed, by any other means which is unaffected by variations in elastic anisotropy.

From the expression

$$t = \frac{2 \times d}{V}$$

the elastic constant $\phi$ may be derived since the velocity V is defined by

$$V = \sqrt{\frac{\phi}{\rho}}$$

where $\rho$ = density of material; $\bar{r}$ is then determined from the previously established empirical relationship between $\phi$ and $\bar{r}$.

It will be understood that the elastic modulus need not be expressly depicted as such, since this property is only inherently utilised in the determination of $\bar{r}$. Accordingly, in one practical embodiment a micrometer measurement is first made of the true thickness of the sheet material, the value d of which is electronically stored and then the transit time t of an ultrasonic pulse transmitted through this material is likewise measured and stored. Also stored is the previously determined relationship between $\bar{r}$ for that material (measured conventionally) and the velocity V of a longitudinal vibration through the material. The velocity V may thus be computed by a micro-processor from the inputs specified, the appropriate value of $\bar{r}$ being retrieved directly from memory by comparing the computed value of V with the stored equivalent.

In another practical embodiment, only the 'thickness' quality of the sheet is utilised, the true thickness being measured using a micrometer and an apparent thickness being determined by means of an ultrasonic thickness meter; these measurements and the difference between the values (adjusted to a standard thickness of sheet) are electronically stored. Also stored is the previously determined relationship for that material between $\bar{r}$ (measured conventionally) and the difference (also for the standard thickness of sheet) between thickness readings measured by the two methods above. The $\bar{r}$ value of the sheet is then obtained directly by comparing the difference between the thickness readings with the stored equivalent.

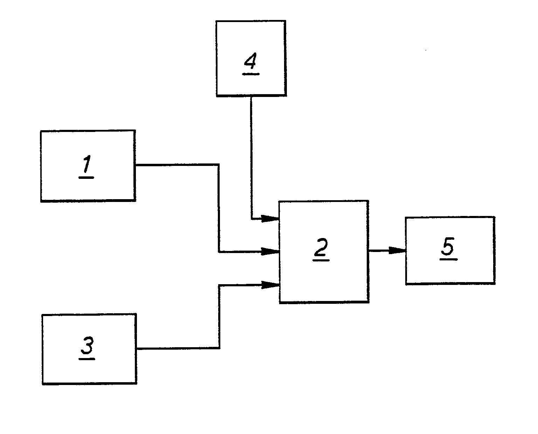

In order that the invention may be fully understood, two embodiments thereof will now be described by way of example only with reference to the accompanying drawing which is a schematic block circuit diagram of apparatus for determining $\bar{r}$ in accordance with this invention.

Referring to the drawing, measuring station 1 provides a digital signal representative of a physical micrometer measurement of the true thickness d of a sample of sheet being assessed for drawability and the output from this unit is transmitted to and stored in a micro-processor based computer unit 2.

Measuring station 3 embodies an ultrasonic transmitter/receiver and a timer; this station functions by timing the interval between the launch and the return of a longitudinal pulse which travels through the thickness of the sample and is reflected back from its remote face. The transit time t of such a pulse through the material is represented by a digital output signal likewise transmitted to the computer unit 2. From these two signals is computed the velocity of the longitudinal pulse through the sample V=2d/t. The previously determined stored relationship between V and $\bar{r}$ measured conventionally for the material in question is then utilised to obtain the corresponding value of $\bar{r}$. in particular, the V, $\bar{r}$ relationship is conveniently stored in the form of a 'look up' table in memory blank 4. Alternatively, $\bar{r}$ may be obtained by evaluating each time the empirical mathematical expression for $\bar{r}$ in terms of V and constants where these constants are stored as before. A combination of these two approaches is sometimes to be preferred.

The appropriate plastic strain ratio $\bar{r}$ is depicted directly on a display unit 5.

In an alternative embodiment the measuring station 1 again provides a signal representative of a physical micrometer measurement of the true thickness of a sample of sheet steel whilst the station 3 provides a signal representative of apparent thickness measured ultrasonically. One example of such an ultrasonic thickness meter is Model No. CL 204 manufactured by Krautkramer. The two signals are fed to the computer unit 2, which in this instance operates to provide a measurement of the difference between these two signals adjusted to a standard thickness of sheet, eg 1 mm—since the 'measured' thickness difference will depend on the thickness of the sheet sampled. Memory bank 4 provides inputs representative of previously determined relationships for the various materials between $\bar{r}$ (measured conventionally) and the difference (for the standard sheet thickness) between true and apparent thickness readings measured physically and ultrasonically respectively as stated above. The $\bar{r}$ value of the actual sample selected is then obtained directly for display on the unit 5 by comparing the difference between the thickness readings as determined by the computer 2 with the stored equivalent from the memory bank.

Although this invention has been described with reference to the particular embodiments illustrated it will be understood that various modifications may be made without departing from the scope of this invention. For example, both measuring stations can be constituted by a single assembly, one or both of hte micrometer anvils also serving as ultrasonic probes. Alternatively, another means may be used for the thickness measurement providing that it is unaffected by changes in elastic anisotropy, eg optical or ionising radiation means. Similarly, the ultrasonic probes may be of the non-contact variety, eg by utilising a suitable couplant. Furthermore, although the embodiments described involve measurement by the time-of-flight method, the invention would be equally applicable if measurements were made of the resonance frequency of the sample and a reference material, use being made in this instance of the relationship between resonance frequency and the velocity of propagation.

In addition, whilst this invention has been described with reference to a mild steel sample, it is applicable wherever there exists a suitable relationship between drawability and elastic anisotropy, measurement being effected either off-line, as described, or on-line in a ocntinuous system.

**Claims**

1. A method of determining the average plastic strain ratio r̄ of sheet material of known density characterised by the steps of measuring the transit time of mechanical vibrations transmitted through the sheet, determining therefrom on the basis of an elastic property which is manifest at the velocity V at which the said vibrations are propagated a value of the apparent thickness of sheet, independently measuring the true thickness of the sheet, and determining the value of r̄ from an empirically predetermined relationship between the difference existing between the true and apparent values of sheet thickness and r̄.

2. A method as claimed in Claim 1 characterised in that signals representative of the true and apparent values of sheet thickness are transmitted to a computer operable to compute the difference between the aforesaid true and apparent values of sheet thickness and to compare the computed difference with a previously derived stored empirical relationship between the said thickness difference and r̄ as determined conventionally for the sheet material, whereby to provide a direct reading of r̄.

3. A method of determining the average plastic strain ratio r̄ of sheet material of known density characterised by the steps of measuring the transit time

$$\frac{t}{2}$$

of a mechanical vibration transmitted through the sheet material, independently measuring the true sheet thickness d, determining the velocity V at which said mechanical vibrations are transmitted through the sheet by the formula

$$t=\frac{2\times d}{V}$$

where t is the transit time and d is the true sheet thickness, determining as a measure for said elastic property the elastic constant φ from the formula

$$V=\sqrt{\frac{\phi}{\rho}}$$

where ρ is the density of the material, and determining the value of r̄ from an empirically predetermined relationship between φ and r̄.

4. A method as claimed in any one of the preceding claims characterised in that the sheet material is excited at its resonance frequency.

5. A method as claimed in any one of the preceding claims characterised in that the method is performed on sheet steel either on-line or off-line.

6. Apparatus for performing the method as claimed in any one of claims 1 to 5, characterised by a first measuring station (3) having means for propagating mechanical vibrations through the thickness of the sheet and means for determining an apparent sheet thickness on the basis of an elastic property of the material which is manifest at the velocity V of the mechanical vibrations propagated through the sheet thickness, a second measuring station (1) having means for measuring true sheet thickness independently of the said elastic property of the sheet material, a computer (2) for processing the outputs from the first and second measuring stations and comparing the processed output with stored values representative of r̄ and predetermined by conventional means for that sheet material, and a display unit (5) having means for providing a direct reading of r̄ upon identity between said processed output and a said stored value.

7. Apparatus for performing the method as claimed in any one of claims 1 to 5 characterised by a measuring station (3) for sequentially effecting a first measurement representative of an apparent thickness of the sheet by propagating vibrations through the thickness of the sheet material and effecting a second measurement of the true thickness independently of the said elastic property of the sheet material, a computer (2) for processing the outputs from said station and comparing the processed output with stored values representative of r̄ and predetermined by conventional means for that sheet material, and a display unit (5) for providing a direct reading of r̄ upon identity between said processed output and a said stored value.

**Patentansprüche**

1. Verfahren zum Bestimmen des durchschnittlichen bleibenden Formänderrungsverhältnisses r̄ von tafel- bzw. plattenförmigem Material bekannter Dichte, gekennzeichnet durch die Schritte, die Durchlaufzeit von durch die Tafel übertragenen mechanischen Vibrationen zu messen, hieraus auf der Basis einer elastischen Eigenschaft, welche bei der Geschwindigkeit V, bei der die Vibrationen fortgepflanzt werden, offenbar ist, einen Wert der scheinbaren Tafeldicke zu bestimmen, unabhängig hiervon die wahre Tafeldicke zu bestimmen, und den Wert von $\bar{r}$ aus einer empirisch vorbestimmten Beziehung zwischen der zwischen den wahren und scheinbaren Werten der Tafeldicke bestehenden Differenz und $\bar{r}$ zu bestimmen.

2. Verfahren nach Anspruch 1, dadurch gekennzeichnet, daß die wahren und scheinbaren Werte der Tafeldicke darstellende Signale einem Rechner zugeführt werden, der die Differenz zwischen den vorgenannten wahren und scheinbaren Werten der Tafeldicke errechnet und die errechnete Differenz mit einer vorher abgeleiteten gespeicherten empirischen Beziehung zwischen der genannten Differenz der Dicke und $\bar{r}$, wie es für das Tafelmaterial konventionell bestimmt worden ist, vergleicht, wodurch ein direktes Ablesen von $\bar{r}$ ermöglicht wird.

3. Verfahren zum Bestimmen des durchschnittlichen bleibenden Formänderungsverhältnisses $\bar{r}$ von tafel- bzw. plattenförmigem Material bekannter Dichte, gekennzeichnet durch die Schritte, die Durchlaufzeit

$$\frac{t}{2}$$

einer durch das Tafelmaterial übertragenen mechanischen Vibration zu messen, unabhängig hiervon die wahre Tafeldicke d zu messen, die Geschwindigkeit V zu bestimmen, bei der die mechanischen Vibrationen durch die Tafel aufgrund der Formel

$$t = \frac{2 \times d}{V}$$

übertragen werden, wobei t die Durchlaufzeit und d die wahre Tafeldicke ist, als Maß für die elastische Eigenschaft die elastische Konstante $\phi$ aus der Formel

$$V = \sqrt{\frac{\phi}{S}}$$

zu bestimmen, wobei $\rho$ die Materialdichte ist, und den Wert von $\bar{r}$ aus einer empirisch vorbestimmten Beziehung zwischen $\phi$ und $\bar{r}$ zu bestimmen.

4. Verfahren nach einem der vorhergehenden Ansprüche, dudurch gekennzeichnet, daß das Tafelmaterial bei seiner Resonanzfrequenz erregt wird.

5. Verfahren nach einem der vorhergehenden Ansprüche, dadurch gekennzeichnet, daß das Verfahren bei Stahlblech entweder on-line oder off-line durchgeführt wird.

6. Vorrichtung zur Durchführung des Verfahrens nach einem der Ansprüche 1 bis 5, gekennzeichnet durch eine erste Meßstation (3) mit einer Einrichtung zum Hindurchführen von mechanischen Vibrationen durch die Dicke der Tatel und einer Einrichtung zum Bestimmen der scheinbaren Tafeldicke auf der Basis einer elastischen Eigenschaft des Materials, welche bei der Geschwindigkeit V der durch die Tafeldicke fortgepflanzten mechanischen Vibrationen offenbar ist, eine zweite Meßstation (1) mit einer Einrichtung zum Messen der wahren Tafeldicke unabhängig von der elastischen Eigenschaft des Tafelmaterial, einem Rechner (2) zum Verarbeiten der Ausgangssignale der ersten und zweiten Meßstationen und zum Vergleichen des verarbeiteten Ausgangssignals mit gespeicherten Werten, die $\bar{r}$ darstellen und mittels einer konventionellen Einrichtung für dieses Tafelmaterial vorbestimmt wurden, und durch eine Anzeigeeinheit (5), welche eine Einrichtung aufweist, um bei Identität zwischen dem verarbeiteten Ausgangssignal und einem der gespeicherten Werte ein direktes Ablesen von $\bar{r}$ zu ermöglichen.

7. Vorrichtung zur Durchführung des Verfahrens nach einem der Ansprüche 1 bis 5, gekennzeichnet durch eine Meßstation (3) zum aufeinanderfolgenden Durchführen einer ersten Messung, welche eine scheinbare Dicke der Tafel darstellt, indem Vibrationen durch die Dicke des Tafelmaterials fortgepflanzt werden, und zum Durchführen einer zweiten Messung der wahren Dicke unabhängig von der elastischen Eigenschaft des Tafelmaterials, durch einen Rechner (2) zum Verarbeiten der Ausgangssignale dieser Station und zum Vergleichen des verarbeiteten Ausgangssignals mit gespeicherten Werten, welche $\bar{r}$ darstellen und mittels konventioneller Einrichtungen für dieses Tafelmaterial vorbestimmt worden sind, und durch eine Anzeigeeinheit (5) zum Vorsehen einer direkten Ablesung von $\bar{r}$ bei Identität zwischen dem verarbeiteten Ausgangssignal und einem der gespeicherten Werte.

**Revendications**

1. Procédé pour déterminer le rapport de sollicitation plastique moyen $\bar{r}$ d'un matériau en feuille de masse volumique connue, caractérisé en ce qu'on mesure le temps de transit de vibrations mécaniques transmises à travers la feuille, on détermine à partir de celui-ci, sur la base d'une propriété élastique qui se manifeste à la vitesse V à laquelle ces vibrations se propagent, une valeur de l'épaisseur apparente de la feuille, on mesure de manière indépendante l'épaisseur réelle de la feuille et on détermine la valeur de $\bar{r}$ à partir d'une relation prédéterminée empiriquement entre la différence existant entre la valeur réelle et la valeur apparente de l'épaisseur de la feuille et $\bar{r}$.

2. Procédé suivant la revendication 1, caractérisé en ce qu'on transmet des signaux représentatifs des valeurs réelle et apparente de l'épaisseur de la feuille à un ordinateur qui est à même de calculer la différence entre les valeurs réelle et apparente précitées de l'épaisseur de la feuille et de comparer la différence calculée à une relation empirique stockée dérivée précédemment entre cette différence d'épaisseurs et r̄ comme déterminé de manière classique pour le matériau en feuille, de manière à obtenir une lecture directe de r̄.

3. Procédé pour déterminer le rapport de sollicitation plastique moyen r̄ d'un matériau en feuille de masse volumique connue, caractérisé en ce qu'on mesure le temps de transit

$$\frac{t}{2}$$

d'une vibration mécanique transmise à travers le matériau en feuille, on mesure de manière indépendante l'épaisseur réelle d de la feuille, on détermine la vitesse V à laquelle ces vibrations mécaniques sont transmises à travers la feuille par la formule

$$t=\frac{2\times d}{V}$$

où t est le temps de transit et d est l'épaisseur réelle de la feuille, on détermine, à titre de mesure de la propriété élastique, la constante élastique φ à partir de la formule

$$V=\sqrt{\frac{\phi}{\rho}}$$

où ρ est la masse volumique du matériau et on détermine la valeur de r̄ à partir d'une relation prédéterminée de manière empirique entre φ et r̄.

4. Procédé suivant l'une quelconque des revendications précédentes, caractérisé en ce qu'on excite le matériau en feuille à sa fréquence de résonance.

5. Procédé suivant l'une quelconque des revendications précédentes, caractérisé en ce qu'on exécute le procédé sur de la tôle d'acier en ligne ou hors ligne.

6. Appareil pour exécuter le procédé suivant l'une quelconque des revendications 1 à 5, caractérisé par un premier poste de mesure (3) comportant un dispositif pour propager des vibrations mécaniques à travers l'épaisseur de la feuille et un dispositif pour déterminer une épaisseur apparente de la feuille sur base d'une propriété élastique du matériau qui se manifeste à la vitesse V des vibrations mécaniques propagées à travers l'épaisseur de la feuille, un deuxième poste de mesure (1) comportant un dispositif pour mesurer l'épaisseur réelle de la feuille indépendamment de la propriété élastique de ce matériau en feuille, un ordinateur (2) pour traiter les signaux de sortie du premier et du second poste de mesure et pour comparer le signal de sortie traité à des valeurs stockées représentatives de r̄ et prédéterminées par des moyens classiques pour ce matériau en feuille, et un bloc d'affichage (5) comportant un dispositif pour fournir une lecture directe de r̄ dans le cas d'une identité entre le signal de sortie traité et une de ces valeurs stockées.

7. Appareil pour exécuter le procédé suivant l'une quelconque des revendications 1 à 5, caractérisé par un poste de mesure (3) destiné à effectuer de manière séquentielle une première mesure représentative d'une épaisseur apparente de la feuille par propagation de vibrations à travers l'épaisseur du matériau en feuille et à effectuer une seconde mesure de l'épaisseur réelle indépendamment de la propriété élastique du matériau en feuille, un ordinateur (2) pour traiter les signaux de sortie de ce poste et pour comparer le signal de sortie traité à des valeurs stockées représentatives de r̄ et prédéterminées par un dispositif classique pour ce matériau en feuille, et un bloc d'affichage (5) pour fournir une lecture directe de r̄ dans le cas d'une identité entre ce signal de sortie traité et une de ces valeurs stockées.